# EUROPÄISCHE PATENTSCHRIFT

(11) **EP 3 333 216 B1**
(45) Veröffentlichungstag und Bekanntmachung des Hinweises auf die Patenterteilung: **06.05.2020**
(21) Anmeldenummer: 17206194.7
(22) Anmeldetag: 08.12.2017
(51) Int. Cl.: C08J 9/00, C08J 9/224, C08J 9/14, C08K 3/00, C08L 61/24, C08L 61/28, C08G 12/12, C08G 12/32

(54) **FLAMMGESCHÜTZTE KUNSTSTOFFSCHAUMSTOFFE**
FLAME RETARDANT PLASTIC FOAMS
MOUSSES EN MATIÈRE PLASTIQUE IGNIFUGES

(30) Priorität: 08.12.2016 EP 16202997; 15.03.2017 EP 17161159
(43) Veröffentlichungstag der Anmeldung: 13.06.2018
(73) Patentinhaber: JOMA-Dämmstoffwerk GmbH, 87752 Holzgünz (DE)
(72) Erfinder: Mang, Matthias, 87740 Buxheim (DE); Mang, Josef, 87700 Memmingen (DE); Döring, Manfred, 64289 Darmstadt (DE)
(74) Vertreter: Kretschmann, Dennis

(56) Entgegenhaltungen:
- WO-A1-2004/096900
- WO-A1-2008/145599
- DATABASE WPI Week 201337 Thomson Scientific, London, GB; AN 2013-D51264 XP002779183, -& CN 102 807 683 A (BEIJING EDDIE TACO TECHNOLOGY CONSULTING CO LTD) 5. Dezember 2012 (2012-12-05)
- DATABASE WPI Week 201410 Thomson Scientific, London, GB; AN 2013-Q20514 XP002769755, -& CN 103 073 804 A (LIU K) 1. Mai 2013 (2013-05-01)

## Beschreibung

Die vorliegende Darstellung betrifft eine Zusammensetzung, die für die Flammschutzausrüstung von schaumförmigen Kunststoffen verwendet werden kann, vorzugsweise von expandiertem Polystyrol, expandierten Polyolefinen oder expandierten Polyurethanen. Die Erfindung betrifft ein Verfahren zur Herstellung von flammgeschützten Schaumstoffformteilen sowie flammgeschützte expandierte Schaumstoffpartikel und flammgeschützte Schaumstoffformteile an sich.

Es ist bekannt, Kunststoffe in Schaumform für die mechanische, thermische und/oder akustische Isolierung bzw. Dämmung einzusetzen. Derartige Kunststoffschäume werden vorzugsweise auf Basis von expandierbarem Polystyrol (EPS), expandierbaren Polyurethanen (EPU), welche vorzugsweise thermoplastisch sind (E-tPU), oder expandierbaren Polyolefinen wie expandierbarem Polyethylen (EPE) oder expandierbarem Polypropylen (EPP), hergestellt. Die Verwendung von extrudiertem Polystyrol (XPS) ist gleichfalls möglich.

Beispielsweise können im Hochbau Polystyrolschaumplatten oder -formen für die thermische und/oder akustische Isolierung eingesetzt werden. Für die Herstellung derartiger Polystyrolschaumplatten oder -formen wird typischerweise expandierbares Polystyrol in Granulatform verarbeitet, wobei im Allgemeinen der Hersteller des expandierbaren Granulats verschieden vom Hersteller des expandierten Polystyrols ist. Dieses granulatförmige Polystyrol weist einen Anteil an Treibmittel auf, wie Pentan, das im Granulat gelöst ist. Beim Erhitzen mit Dampf erweicht das Granulat, wobei das freigesetzte gasförmige Pentan als Treibmittel die Ausdehnung des erweichten Polystyrolgranulats bis zum fünfzigfachen seines ursprünglichen Volumens bewirkt. Danach werden die erhaltenen expandierten Schaumstoffpartikel in Formen eingebracht. Beim Einleiten von Dampf in die Formen erweichen die expandierten Polystyrolpartikel erneut, wobei weiteres Pentan freigesetzt wird. In dieser zweiten Stufe ist die Volumenausdehnung durch die Formwände begrenzt, wodurch die Partikel zusammengedrückt und zu einer einzigen leichten Masse aus expandiertem Polystyrolschaum verschmolzen werden.

Wenn die Form in Form eines Blocks vorliegt, können die Blöcke aus expandiertem Polystyrol anschließend in Platten geschnitten werden. Diese Platten können als Kerne von isolierenden Wänden oder Platten, vorzugsweise wärmeisolierenden Wänden oder Platten, verwendet werden. Durch die Gestaltung der Form können aber auch beliebig geformte Schaumstoffteile erzeugt werden.

Analoge Verfahren sind für die Herstellung von expandierten Polyolefinen oder expandierten (thermoplastischen) Polyurethanen bekannt.

Ein Nachteil von Kunststoffschaumstoffen ist ihre hohe Verbrennungs- und/oder Schmelzneigung bei einem Brand, der gewöhnlich zum Verlust der Strukturfestigkeit führt.

Beispielsweise kann sich schmelzendes Polystyrol entzünden und einen bestehenden Brand weiter ausdehnen, beispielsweise einen Brand, der auch auf die isolierten Wände beispielsweise einer Hausfassade übergreifen kann. Das Brandverhalten von expandiertem Polystyrol wird nämlich davon dominiert, dass es bei Temperaturen wenig über 100 °C schmilzt und dann unter Schmelzen abtropft. Durch Zersetzung und etwaige vorhandene Reste des verwendeten Treibmittels kann es zur Entzündung und Brennen des geschmolzenen Polystyrols kommen, was zu einer Brandausbreitung durch Sekundärbrände führen kann.

Durch geeignete Flammschutzmittel kann die Brennbarkeit von expandiertem Polystyrol reduziert werden. Bislang wurden dafür oftmals polybromierte Diphenylether oder Hexabromcyclohexan als Flammschutzmittel verwendet. Dabei können allerdings polybromierte Dibenzodioxine und Dibenzofurane entstehen. Die Verwendung von bromhaltigen Flammschutzmitteln ist deshalb nur eingeschränkt möglich.

EP 2 994 503 (WO 2014/179842 A1) schlägt vor, die Feuerbeständigkeit von Polystyrolschaumstoffen dadurch zu erhöhen, dass die Polystyrolpartikel, aus denen der Schaumstoff aufgebaut ist, in eine Phenolharzmatrix eingebettet werden.

EP 2 708 667 B1 betrifft ein Verfahren zur Herstellung eines flammgeschützten Dämmelements, bei welchem vorgeschäumte Polystyrol-Partikel verwendet werden, von denen zumindest ein Teil vor dem Einfüllen in eine Form und dem Versintern beschichtet werden, wobei die vorgeschäumten Polystyrol-Partikel zumindest teilweise mit einem organischen Bindemittel und mit wenigstens einem Flammschutzmittel beschichtet werden, dadurch gekennzeichnet, dass die vorgeschäumten und zumindest mit Bindemittel beschichteten Polystyrol-Partikel vor dem vollständigen Trocknen der Beschichtung mit einem Flammschutzmittel beschichtet werden.

EP 2 743 296 offenbart ein Verfahren zur Herstellung eines flammgeschützten Dämmelements aus einem Verbundwerkstoff umfassend geschäumtes Polystyrol, wobei ein schäumbarer duroplastischer Kunststoff, der mit einem Flammschutzmittel ausgerüstet ist, in das geschäumte Polystyrol eingearbeitet wird, wobei der duroplastische Kunststoff Polyurethan, Polyisocyanurat, Phenolharzschaum und/oder Melaminschaum ist, der vorzugsweise mit Melamin, Tris(2-chloroisopropyl)phosphat und/oder Blähgraphit als Flammschutzmittel ausgerüstet ist.

CN 103073804 offenbart in Beispiel 1 ein Herstellungsverfahren für feuerhemmende und wärmeisolierende Polystyrolplatten, bei dem Wasser, Melaminharz, Magnesiumoxid, Aluminiumhydroxid und Eisenoxid mit weiteren Additiven vermischt werden, wobei die erhaltene Mischung als Flammschutzmittel zum Beschichten von expandierten Polystyrolschaumstoffpartikeln eingesetzt wird. Nach Zugabe eines Härters wird in einer Form erhitzt und das erhaltene Formteil getrocknet.

Eine Flammschutz-Zusammensetzung umfassend eine Natriumsilikat-Lösung, ein Melaminharz sowie Mono-Ammoniumphosphat ist in der WO 2004/096900 A1 beschrieben. Das Gewichtsverhältnis von Melaminharz und Mono-Ammoniumsphosphat zu Natriumsilikat beträgt 5:1.

CN 102807683 A1 offenbart eine Beschichtungszusammensetzung für Schaumstoffpartikel, welche 0,75 kg eines Harnstoff-Formaldehyd-Harzes sowie 1 kg expandiertes Graphit in einer Lösung von 2,5 kg Wasser umfasst.

Ein Verfahren zur Herstellung eines Schaumstoffformteils, insbesondere zur Verwendung als Dämmmaterial, ist auch in der WO 2008/145599 A1 beschrieben.

In Anbetracht der großen Bedeutung von Kunststoffschäumen als Dämm- und Isolationsmaterial wie beispielsweise Polystyrolschaum für den Wärmeschutz besteht eine steigende Nachfrage nach wirksamen Flammschutzmitteln, mit denen derartige Kunststoffschäume ausgerüstet werden können.

Aufgabe der vorliegenden Erfindung ist deshalb die Bereitstellung eines Flammschutzmittels, mit welchem die Feuerbeständigkeit von Schaumstoffpartikeln auf Kunststoffbasis oder Schaumstoffformteilen auf Kunststoffbasis im Vergleich zu einem Schaumstoff, der dieses Flammschutzmittel nicht enthält, wirksam erhöht werden kann.

Diese Aufgabe wurde gelöst mit einem Verfahren wie in Anspruch 1 definiert. Bevorzugte Ausführungsformen sind in den davon abhängigen Ansprüchen definiert. Die nebengeordneten Ansprüche definieren bevorzugte Ausführungsformen der mit der erfindungsgemäßen Zusammensetzung ausgestatteten Kunststoffpartikel oder Kunststoffschäume.

Erster Aspekt zur Veranschaulichung der Erfindung: Zusammensetzung für die Erhöhung der Flammbeständigkeit von Schaumstoffen

In einem ersten Aspekt zur Veranschaulichung der Erfindung betrifft die Darstellung eine Zusammensetzung für die Erhöhung der Flammbeständigkeit von Schaumstoffen. Die Zusammensetzung wird als Flammschutzmittel verwendet.

Der Begriff "Flammschutzmittel" (oder auch Brandhemmer) bedeutet Stoffe, welche die Ausbreitung von Bränden einschränken, verlangsamen oder verhindern sollen.

Die Begriffe "Zusammensetzung für die Erhöhung der Flammbeständigkeit" oder "Flammschutzmittel" bedeutet eine Zusammensetzung oder ein Mittel, die oder das die Ausbreitung von Bränden einschränken, verlangsamen oder verhindern soll.

Die erfindungsgemäß verwendete Zusammensetzung enthält ein mineralisches Flammschutzmittel (A) und ein organisches Flammschutzmittel (B).

Der Begriff "mineralisches Flammschutzmittel" bedeutet dabei eine anorganische Substanz, welche die Ausbreitung von Bränden einschränkt, verlangsamt oder verhindert.

Der Begriff "mineralisches Flammschutzmittel" umfasst auch anorganische nichtmetallische Substanzen, welche kristalline Bestandteile enthalten. Es kann sich dabei um natürliche Minerale handeln, oder um ein Stoffgemisch aus gesiebten oder gemahlenen Mineralien.

Der Begriff "*organisches Flammschutzmittel*" bedeutet eine organische Substanz, welche die Ausbreitung von Bränden einschränkt, verlangsamt oder verhindert.

Erfindungsgemäß enthält in einer Ausführungsform die Zusammensetzung zumindest die Komponenten (A) bis (D):
(A) ein Aluminium-, Magnesium- oder Calciumsalz, oder zwei oder drei davon;
   oder
   ein oder mehrere Silikate; oder
   ein oder mehrere Carbonate; oder
   ein oder mehrere Aerogele; oder
   ein Aluminium-, Magnesium- oder Calciumsalz, oder zwei oder drei davon; und ein oder mehrere Silikate; oder
   ein Aluminium-, Magnesium- oder Calciumsalz, oder zwei oder drei davon; und ein oder mehrere Silikate; und ein oder mehrere Carbonate; oder
   ein Aluminium-, Magnesium- oder Calciumsalz, oder zwei oder drei davon; und ein oder mehrere Silikate; und ein oder mehrere Carbonate; und ein oder mehrere Aerogele; oder
   ein Aluminium-, Magnesium- oder Calciumsalz, oder zwei oder drei davon; und ein oder mehrere Carbonate; oder
   ein Aluminium-, Magnesium- oder Calciumsalz, oder zwei oder drei davon; und ein oder mehrere Carbonate; und ein oder mehrere Aerogele; oder
   ein Aluminium-, Magnesium- oder Calciumsalz, oder zwei oder drei davon; und ein oder mehrere Aerogele; oder
   ein oder mehrere Silikate; und ein oder mehrere Carbonate; oder
   ein oder mehrere Silikate; und ein oder mehrere Carbonate; und ein oder mehrere Aerogele; oder
   ein oder mehrere Silikate; und ein oder mehrere Aerogele; oder
   ein oder mehrere Carbonate; und ein oder mehrere Aerogele;
   oder
   (A) ein Aluminium-, Magnesium- oder Calciumsalz, oder zwei oder drei davon;
   (B) ein Additionsprodukt oder Kondensationsprodukt aus Melamin und einem Aldehyd, vorzugsweise Formaldehyd, oder aus Harnstoff und einem Aldehyd, vorzugsweise Formaldehyd, oder ein Gemisch davon;
   (C) einen Härter für das Kondensationsprodukt (B);
   (D) Wasser.

In einer Ausführungsform besteht die erfindungsgemäße Zusammensetzung aus den Komponenten (A) bis (D).

### Komponente (A):

Erfindungsgemäß enthält die Zusammensetzung ein mineralisches Flammschutzmittel.

Erfindungsgemäß enthält in einer Ausführungsform die Zusammensetzung ein Aluminium-, Magnesium- oder Calciumsalz, oder zwei oder drei davon.

In einer Ausführungsform enthält die Zusammensetzung jeweils ein oder mehrere Aluminium- oder Magnesium- oder Calciumsalze. In einer weiteren Ausführungsform enthält die Zusammensetzung jeweils ein oder mehrere Aluminium- und Magnesiumsalze oder Aluminium- und Calciumsalze oder Magnesium- und Calciumsalze oder Aluminium- und Magnesium- und Calciumsalze.

In einer bevorzugten Ausführungsform enthält die Zusammensetzung ein oder mehrere Aluminiumsalze, optional zusammen mit jeweils ein oder mehreren Magnesium- oder Calciumsalzen oder Magnesium- und Calciumsalzen.

Die erfindungsgemäße Zusammensetzung kann als Komponente (A) als Salze die Sulfate, Phosphate, Carbonate oder Hydroxide enthalten, oder zwei oder mehr davon.

Vorzugsweise enthält die Zusammensetzung ein oder mehrere Hydroxide.

Weiter vorzugsweise enthält die Zusammensetzung zumindest Aluminiumhydroxid Al(OH)₃.

Weitere Begriffe für Aluminiumhydroxid sind Aluminiumtrihydrat (ATH; CAS Nr. 21645-51-2), Hydrargillit, Bayerit, Böhmit, Diaspor, Nordstrandit oder Tonerdehydrat.

Zusätzlich oder auch alternativ zum Aluminium-, Magnesium- oder Calciumsalz können in der erfindungsgemäßen Zusammensetzung weitere mineralische Flammschutzmittel vorhanden sein.

In einer Ausführungsform sind dies ein oder mehrere Silikate oder Carbonate.

Der Begriff "Silikate" umfasst die Salze der ortho-Kieselsäure und deren Kondensate.

Die Silikate können synthetisch hergestellt werden wie auch natürlichen Ursprungs sein.

Silikate sind beispielsweise Talk, Wollastonit, Glimmer oder Kaolin.

Der Begriff "Carbonate" umfasst die Salze der Kohlensäure (H₂CO₃).

Die Carbonate können synthetisch hergestellt werden wie auch natürlichen Ursprungs sein.

Geeignete Carbonate sind beispielsweise Natriumcarbonat und Calciumcarbonat.

Weitere Carbonate sind beispielsweise Dolomit, Huntit oder Magnesit.

Die Verwendung von kalzinierten Carbonaten ist gleichfalls möglich.

Zusätzlich oder auch alternativ zum Aluminium-, Magnesium- oder Calciumsalz können in der erfindungsgemäßen Zusammensetzung ein oder mehrere Aerogele vorhanden sein.

Der Begriff "Aerogel" umfasst einen hochporösen Festkörper, bei dem bis zu 99,98 % des Volumens aus Poren bestehen. Aerogele können auf Silikatbasis oder Metalloxidbasis hergestellt werden. Vorzugsweise kann hierzu das bekannte Sol-Gel-Verfahren eingesetzt werden.

Die Verwendung von Aerogelen kann nicht nur den Flammschutz begünstigen sondern darüber hinaus insbesondere auch den Dämmschutz.

In einer Ausführungsform wird somit in der erfindungsgemäßen Zusammensetzung eingesetzt:
(A) ein Aluminium-, Magnesium- oder Calciumsalz, oder zwei oder drei davon; oder
   ein oder mehrere Silikate; oder
   ein oder mehrere Carbonate; oder
   ein oder mehrere Aerogele; oder
   ein Aluminium-, Magnesium- oder Calciumsalz, oder zwei oder drei davon; und ein oder mehrere Silikate; oder
   ein Aluminium-, Magnesium- oder Calciumsalz, oder zwei oder drei davon; und ein oder mehrere Silikate; und ein oder mehrere Carbonate; oder
   ein Aluminium-, Magnesium- oder Calciumsalz, oder zwei oder drei davon; und ein oder mehrere Silikate; und ein oder mehrere Carbonate; und ein oder mehrere Aerogele; oder
   ein Aluminium-, Magnesium- oder Calciumsalz, oder zwei oder drei davon; und ein oder mehrere Carbonate; oder
   ein Aluminium-, Magnesium- oder Calciumsalz, oder zwei oder drei davon; und ein oder mehrere Carbonate; und ein oder mehrere Aerogele; oder
   ein Aluminium-, Magnesium- oder Calciumsalz, oder zwei oder drei davon; und ein oder mehrere Aerogele; oder
   ein oder mehrere Silikate; und ein oder mehrere Carbonate; oder
   ein oder mehrere Silikate; und ein oder mehrere Carbonate; und ein oder mehrere Aerogele; oder
   ein oder mehrere Silikate; und ein oder mehrere Aerogele; oder
   ein oder mehrere Carbonate; und ein oder mehrere Aerogele.

### Komponente (B):

Erfindungsgemäß enthält die Zusammensetzung (B) ein oder mehrere Additionsprodukte oder Kondensationsprodukte aus Melamin und einem Aldehyd, vorzugsweise Formaldehyd, oder aus einem Harnstoff und einem Aldehyd, vorzugsweise Formaldehyd, oder ein Gemisch davon. Derartige Additionsprodukte und Kondensationsprodukte sind auch unter dem Begriff oder "*Harnstoffharz*" bekannt. Sie können nach bekannten Verfahren hergestellt werden und sind kommerziell erhältlich.

Der Begriff *"Additionsprodukt oder Kondensationsprodukt aus Melamin und Formaldehyd (Melamin-Formaldehyd-Kondensationsharze)"* bedeutet ein Additions-oder Kondensationsharz, welches auf den Verbindungen Melamin und Formaldehyd basiert.

Der Begriff schließt reine Melamin-Formaldehyd-Additions- und -Kondensationsharze (MF) wie auch modifizierte Melaminharze ein. Modifizierte Melaminharze, welche im Sinne der Erfindung eingesetzt werden können, sind vorzugsweise Melamin-Phenol-Formaldehyd-Harze (MPF) und Melamin-Harnstoff-Formaldehyd-Harze (UMF).

Der Begriff "*Additionsprodukt oder Kondensationsprodukt aus Harnstoff und Formaldehyd (Harnstoff-Formaldehyd-Kondensationsharz)*" bedeutet ein Additions- oder Kondensationsharz, welches auf den Verbindungen Harnstoff und Formaldehyd basiert (UF-Harz).

In den Additionsprodukten oder Kondensationsprodukten aus Melamin und Formaldehyd bzw. Harnstoff und Formaldehyd können auch Aldehydeinheiten vorhanden sein, die von Formaldehyd verschieden sind. Geeignete Aldehyde sind vorzugsweise Acetaldehyd, Propionaldehyd, Butyraldehyd, Glyoxal, Glyoxylsäure und Glutardialdehyd. Kondensationsprodukte aus Melamin oder Harnstoff mit Aldehyden, welche von Formaldehyd verschieden sind, können auch den Kondensationsprodukten aus Melamin und Formaldehyd bzw. Harnstoff und Formaldehyd zugemischt werden.

Vorzugsweise sind in den Additionsprodukten und Kondensationsprodukten aus Melamin und Formaldehyd bzw. Harnstoff und Formaldehyd Additions- oder Kondensationsprodukte mit anderen Aldehyden in einer Menge von weniger als 50 Gew.-%, vorzugsweise weniger als 30 Gew.-%, mehr bevorzugt weniger als 20 oder 10 Gew.-% vorhanden, bezogen auf das Gesamtgewicht des Additions- oder Kondensationsprodukts.

In einer bevorzugten Ausführungsform werden Additionsprodukte oder Kondensationsprodukte aus Melamin und Formaldehyd und/oder Harnstoff und Formaldehyd eingesetzt, die keine weiteren Aldehydeinheiten enthalten, die von Formaldehyd verschieden sind.

In einer weiteren Ausführungsform können Additionsprodukte oder Kondensationsprodukte aus Melamin und einem Aldehyd und/oder Harnstoff und einem Aldehyd eingesetzt werden, welche Aldehydeinheiten enthalten, die von Formaldehyd verschieden sind.

Bevorzugte Aldehyde sind dann die oben genannten Aldehyde wie Acetaldehyd, Propionaldehyd, Butyraldehyd, Glyoxal, Glyoxylsäure und Glutardialdehyd. Die Verwendung von Benzaldehyd ist gleichfalls möglich.

In einer Ausführungsform kann das Melaminharz oder Harnstoffharz oder die Melaminharze oder Harnstoffharze in der erfindungsgemäßen Zusammensetzung in einem teilweise gehärteten Zustand vorliegen. Der Begriff "*teilweise gehärteter Zustand'* bedeutet, dass ein Teil der Halbaminalgruppen wie vorzugsweise Methylolgruppen, welche im Harz vorliegen, miteinander reagiert haben, wobei in bekannter Weise Ether-oder Methylenbrücken gebildet werden, über die ein Netzwerk aufgebaut wird.

Es ist bevorzugt, dass in der erfindungsgemäßen Zusammensetzung Kondensationsprodukte (B) verwendet werden, vorzugsweise MF- oder UF-Kondensationsprodukte, in denen weniger als 50 % der vorhandenen Halbaminalgruppen, vorzugsweise Methylolgruppen miteinander reagiert haben, vorzugsweise weniger als 40 %, weiter bevorzugt weniger als 30 % oder 20 % oder 10 %.

Dies bedeutet, dass im Harz kondensierte wie auch nichtkondensierte Verbindungen, also reine Additionsverbindungen von Aldehyd an Melamin oder Harnstoff wie auch Kondensationsverbindungen vorhanden sein können.

Somit umfasst der hier verwendete Begriff "*Melaminharz*" oder "*Harnstoffharz*" sowohl die oben definierten Additionsprodukte oder Kondensationsprodukte wie auch Additionsprodukte und Kondensationsprodukte wie der Begriff "*Melaminharz*" oder "*Harnstoffharz*" auch üblicherweise im Stand der Technik verstanden wird.

### Komponente (C):

Erfindungsgemäß enthält die Zusammensetzung einen (C) Härter für das Additionsprodukt oder Kondensationsprodukt (B). Dieser Härter hat die Aufgabe, unter geeigneten Reaktionsbedingungen die Komponente (B) in Kombination mit einem Schaumstoffpartikel auszuhärten.

Der Begriff "*Härter"* umfasst alle Substanzen, welche die Reaktion von Methylolgruppen untereinander bei entsprechenden Reaktionsbedingungen katalysieren können. Insbesondere sind Verbindungen als Härter geeignet, welche bei Erhöhung der Temperatur über die Raumtemperatur hinaus eine entsprechende Reaktion katalysieren können.

Vorzugsweise umfasst der Härter (C) eine Substanz, welche Protonen abspalten kann.

Vorzugsweise ist der Härter (C) eine organische Säure oder eine anorganische Säure oder ein Ester davon.

Zu den organischen Säuren gehören Sulfonsäuren und ihre Ester, einschließlich Benzolsulfonsäure, Toluolsulfonsäure, Phenolsulfonsäure, Xylolsulfonsäure, β-Naphthalinsulfonsäure, α-Naphthalinsulfonsäure, Ester davon, und Mischungen davon. Es können einwertige wie auch mehrwertige organische Säuren oder anorganische Säuren eingesetzt werden.

Mehrwertige organische Säuren oder anorganische Säuren können auch teilweise verestert sein.

Die Säuren können ferner anorganische Säuren und ihre Ester oder teilveresterte Säuren entweder allein oder im Gemisch enthalten.

Die Säuren, die eingesetzt werden können, umfassen ferner Gemische von zwei oder mehr starken organischen Säuren, Mischungen von zwei oder mehr Estern starker organischer Säuren, Mischungen von zwei oder mehr schwachen anorganischen Säuren und Gemische von zwei oder mehr Estern schwacher anorganischer Säuren sowie Gemische verschiedener Säuren oder deren Ester oder Teilester. Geeignete Katalysatoren sind Phosphatester und Gemische von Phosphorsäure mit starken organischen Säuren wie Benzolsulfonsäure oder jeder anderen Sulfonsäure. Mischungen von zwei oder mehr der Säuren und / oder der Ester oder Teilester können ebenfalls verwendet werden.

In einer bevorzugten Ausführungsform enthält die Säure (C) Ammoniumionen. Die Ammoniumionen liegen in der erfindungsgemäßen Zusammensetzung vorzugsweise als Ammoniumsulfat oder Ammoniumphosphat oder Ammoniumpolyphosphat (CAS Nr. 68333-79-9) vor.

In einer besonders bevorzugten Ausführungsform enthält die Säure Ammoniumsulfat oder ist Ammoniumsulfat.

Als Härter können auch "latente" Härter eingesetzt werden, d.h. Härter, die erst unter den Reaktionsbedingungen der Stufe (W3) eine Säure, d.h. Protonen freisetzen.

### Komponente (D):

Als Wasser kann Leitungswasser oder Brauchwasser verwendet werden.

Die Gewichtsverhältnisse der Komponenten (A) bis (D) können in der erfindungsgemäßen Zusammensetzung innerhalb weiter Grenzen schwanken.

Hierbei liegt das Gewichtsverhältnis (A):(B) im Bereich von 1:0,8 bis 1:2, vorzugsweise 1:1,25 bis 1:1,75, und liegt das Gewichtsverhältnis (B):(C) im Bereich von 20:1 bis 10:1, bevorzugt 17:1 bis 13:1.

Grundsätzlich ist jedoch auch möglich, Komponente (C) in Mengen einzusetzen, welche ein Gewichtsverhältnis (B):(C) kleiner als 10:1 erlauben. Dies kann dann erwünscht sein, wenn der Härter gleichzeitig als Flammschutzmittel wirkt, wie beispielsweise Ammoniumsulfat oder Ammoniumphosphat.

Die Komponenten (A), (B) und (C) können in der erfindungsgemäßen Zusammensetzung so vorliegen, dass sie in der Zusammensetzung in einer Menge im Bereich von 5 bis 70 Gew.-% vorliegen, wobei die Summe der Komponenten (A) bis (D) in der Zusammensetzung 100 Gew.-% beträgt.

Vorzugsweise wird der Festkörpergehalt der erfindungsgemäßen Zusammensetzung in Abhängigkeit der verwendeten Komponenten (A) bis (D) so eingestellt, dass die Zusammensetzung für die Verarbeitung eine ausreichend niedrige Fließfähigkeit aufweist.

Die Zusammensetzung kann ferner einen Füllstoff und insbesondere einen verstärkenden Füllstoff umfassen. Es können ein oder mehrere Füllstoffe in Abhängigkeit von den für das Endprodukt erforderlichen Eigenschaften verwendet werden. Geeignete, nicht limitierende Füllstoffe umfassen teilchenförmiges Siliziumdioxid, Talk, Kaolin, Ton und Titandioxid, Glasfaser, Nanokomposite und Nanopartikel. Es können auch anorganische Verbindungen, insbesondere teilchenförmige anorganische Verbindungen, verwendet werden. Der Füllstoff kann in Mengen von 0,5 bis 60 Gew.-% oder 1 bis 20 Gew.-% oder 2 bis 15 Gew.-%, bezogen auf das Gesamtgewicht der Zusammensetzung, vorliegen.

Die Eigenschaften des teilchenförmigen Füllstoffs können in geeigneter Weise durch Behandlung mit einem oder mehreren Mitteln modifiziert werden, zum Beispiel um die Oberflächeneigenschaften des Füllstoffs zu modifizieren. Eine solche Behandlung kann beispielsweise die Löslichkeit von löslichen Füllstoffen in einer Flüssigkeit, insbesondere einer wässrigen Flüssigkeit, verringern. Die Auswahl des (der) Modifizierungsmittel (e) hängt von den gewünschten Eigenschaften des Füllstoffs ab. Eine bevorzugte Klasse von Modifizierungsmittel schließt Silane ein. Es sind auch granuläre Borsäuren geeignet, die mit einem Silan behandelt werden können, um eine silanbeschichtete körnige Borsäure mit verringerter Wasserlöslichkeit zu ergeben.

Der Füllstoff kann vorzugsweise eine Partikelgröße zwischen 0,1 mm und 5 mm oder zwischen 0,5 mm und 2 mm aufweisen. Partikelgrößen von 0,05 bis 1 mm sowie nanoskalige Partikel sind gleichfalls möglich.

Die erfindungsgemäße Zusammensetzung kann weitere Komponenten enthalten, die vorzugsweise im Flammschutz verwendet werden. Mögliche Verbindungen sind Resole, Phosphate und Sulfate, Borate, oder organische Halogen- oder Phosphorverbindungen. Expandierbarer Graphit kann gleichfalls eingesetzt werden.

Geeignete Phosphorverbindungen sind typischerweise aromatische und aliphatische Ester der Phosphorsäure, wie TCEP (Tris(chlorethyl)phosphat), TCPP Tris(chlorpropyl)phosphat), TDCPP (Tris(dichlorisopropyl)phosphat), TPP (Triphenylphosphat), TEHP (Tris-(2-ethylhexyl)phosphat), TKP (Trikresylphosphat), ITP ("Isopropyliertes Triphenylphosphat") Mono-, Bis- und Tris(isopropylphenyl)phosphate unterschiedlichen Isopropylierungsggrades, RDP (Resorcinol-bis(diphenylphosphat)) und BDP (Bisphenol-A-bis(diphenylphosphat)).

In einer Ausführungsform kann die erfindungsgemäße Zusammensetzung auch weitere Flammschutzmittel enthalten, also beispielsweise geeignete organische Halogenverbindungen oder Phosphorverbindungen.

In einer bevorzugten Ausführungsform enthält die erfindungsgemäße Zusammensetzung keine organischen Halogenverbindungen, insbesondere keine Bromverbindungen.

In einer weiteren bevorzugten Ausführungsform enthält die erfindungsgemäße Zusammensetzung keine organischen Phosphorverbindungen.

In einer weiteren bevorzugten Ausführungsform enthält die erfindungsgemäße Zusammensetzung weder organische Halogenverbindungen noch organische Phosphorverbindungen.

Es können auch ein oder mehrere Tenside in der Zusammensetzung vorliegen. Geeignete Tenside umfassen Silikonpolyether, insbesondere Silikonglykol-Copolymere. Wasserabweisende Mittel, wie Silicium-enthaltende wässrige Emulsionen, können ebenfalls zugegeben werden, um die Wasserabsorption zu kontrollieren oder zu reduzieren.

Einer oder mehrere der Bestandteile der teilchenförmigen Zusammensetzung können mit anderen Additiven und / oder Modifikatoren behandelt werden. Beispielsweise können sie mit einem thermischen Leitfähigkeitsmodifikator wie Kohlenstoff, insbesondere einem wässrigen dispergierten Kohlenstoff, behandelt werden. Die thermoplastischen Mikrokügelchen können mit einem thermischen Leitfähigkeitsmodifikator wie Kohlenstoff, insbesondere einem wässrigen dispergierten Kohlenstoff, behandelt werden, bevor sie mit den anderen Komponenten der teilchenförmigen Zusammensetzung vereinigt werden.

Die Darstellung betrifft auch ein Verfahren zur Herstellung der erfindungsgemäßen Zusammensetzung, mindestens aufweisend die Stufe (V):
(V) Vermischen der Komponenten (A) bis (D).

Die Komponenten (A) bis (C) können entweder als Feststoffe mit Komponente (D) vermischt oder als wässrige Lösungen vermischt werden. Gegebenenfalls kann die entstandene Zusammensetzung weiter mit Wasser verdünnt werden, um eine Fließfähigkeit einzustellen, welche für die weitere Verarbeitung gewünscht wird.

Die Zusammensetzung kann entweder als Lösung oder als Suspension vorliegen.

In einer Ausführungsform wird als Komponente (A) Aluminiumhydroxid, als Komponente (B) ein Kondensationsprodukt aus Melamin und Formaldehyd und als Komponente (C) Ammoniumsulfat eingesetzt.

Erfindungsgemäß wird die erfindungsgemäße Zusammensetzung für die Herstellung von expandierten Schaumstoffpartikeln und Schaumstoffformteilen verwendet, um deren Flammschutz zu verbessern.

### Zweiter Aspekt der Erfindung: Verfahren zur Herstellung von expandierten Schaumstoffpartikeln und Schaumstoffformteilen mit verbesserter Flammbeständigkeit

Das Verfahren zur Herstellung eines Schaumstoffformteils mit verbesserter Flammbeständigkeit weist zumindest die Stufe (W1) auf:
(W1) Kontaktieren von expandierten Schaumstoffpartikeln mit einer Zusammensetzung wie im ***ersten Aspekt*** definiert.

Das Kontaktieren in Stufe (W1) kann in einer Ausführungsform durch Besprühen von expandierten Schaumstoffpartikeln mit der Zusammensetzung wie im ***ersten Aspekt*** definiert in einem geeigneten Mischaggregat erfolgen. Geeignete Mischaggregate sind beispielsweise Trommel- oder Schaufelmischer oder auch Wendelrührer.

In anderen Ausführungsformen kann das Kontaktieren durch Spritzen oder Tauchen oder sonstige Mischungsverfahren erfolgen.

In einer alternativen Ausführungsform können in Stufe (W1) die Komponenten (A) bis (D) sowie auch weitere optional vorhandene Komponenten getrennt voneinander oder teilweise getrennt voneinander den expandierten Schaumstoffpartikeln zugegeben werden. Dann entsteht während des Kontaktierens gemäß Stufe (W1) eine Zusammensetzung wie im ***ersten Aspekt*** definiert.

Nachfolgend schließt sich im erfindungsgemäßen Verfahren die Stufe (W2) an:
(W2) Entfernen von Wasser aus den expandierten Schaumstoffpartikeln wie in Stufe (W1) erhalten.

Das Entfernen gemäß Stufe (W2) kann erfolgen durch Absieben der kontaktierten Schaumstoffpartikel, durch Abzentrifugieren, Abschleudern und/oder durch Temperaturerhöhung. Dieses Entfernen gemäß der Stufe (W2) wird vorzugsweise solange fortgesetzt, bis der Wassergehalt so niedrig ist, dass die Schaumstoffpartikel rieselfähig sind. Vorzugsweise wird das Entfernen von Wasser solange durchgeführt, bis die Schaumstoffpartikel trocken erscheinen und nicht mehr zusammenkleben.

Bevorzugt wird das Wasser thermisch entfernt. Es können Vorrichtungen verwendet werden die im Stand der Technik bekannt sind, beispielsweise Röhrentrockner, Schaufeltrockner, Schneckentrockner, Trommeltrockner oder Wirbelschichttrockner.

Die Trocknungstemperatur wird typischerweise in einem Bereich gehalten, in welchem die Aushärtung der Kondensationsverbindung (B) noch nicht eintritt. Ein geeigneter Bereich kann durch Vorversuche leicht ermittelt werden. Ein bevorzugter Temperaturbereich von 30 bis 80 °C ist zumeist geeignet.

Der Begriff "*bis der Wassergehalt so niedrig ist, dass die Schaumstoffpartikel rieselfähig sind*" bedeutet in diesem Zusammenhang, dass die Schaumstoffpartikel vorzugsweise weniger als 10 Gew.-% Wasser enthalten, bezogen auf das Gesamtgewicht der Schaumstoffpartikel und Wasser, oder weniger als 7 Gew.-% Wasser oder weniger als 5 Gew.-% Wasser oder weniger als 3 Gew.-% Wasser oder weniger als 1 Gew.-% Wasser.

In einer besonders bevorzugten Ausführungsform wird solange getrocknet, bis die Schaumstoffpartikel weniger als 0,5 Gew.-% Wasser enthalten und weiter bevorzugt weniger als 0,1 Gew.-% und weiter bevorzugt weniger als 0,05 Gew.-%.

In einer bevorzugten Ausführungsform sind die Schaumstoffpartikel vor Ausführen der nachfolgenden Stufe (W3) somit im Wesentlichen wasserfrei.

Obwohl das Additionsprodukt oder Kondensationsprodukt (B) reaktiv ist, ist es in der teilchenförmigen Zusammensetzung in einem latenten Zustand vorhanden und muss in geeigneter Weise aktiviert werden, um eine Härtung zu induzieren.

Die expandierten Schaumstoffpartikel sind nach dem Kontaktieren gemäß Stufe (W1) und der Stufe (W2) zumindest teilweise mit der Zusammensetzung wie im ***ersten Aspekt*** definiert, beschichtet.

In einer Ausführungsform wird die Sequenz der Stufen (W1) und (W2) einfach, d.h. einmal, ausgeführt.

In einer weiteren Ausführungsform kann die Sequenz der Stufen (W1) und (W2) mehrfach ausgeführt werden. Ein mehrfaches Ausführen der Sequenz der Stufen (W1) und (W2) führt zu einer Erhöhung der Beschichtungsdicke und kann damit auch zu einem verbesserten Flammschutz führen.

Die erhaltenen rieselfähigen und zumindest teilweise mit der erfindungsgemäßen Zusammensetzung beschichteten Schaumstoffpartikel können dann vom Hersteller der Schaumstoffpartikel selbst weiterverarbeitet oder an Dritte zur Weiterverarbeitung abgegeben werden.

Die Schaumstoffformteile können durch Erhitzen der Schaumstoffpartikel aufweisend die erfindungsgemäße Zusammensetzung hergestellt werden. Vorzugsweise erfolgt durch die Einwirkung von Hitze und den Härter (C) Vernetzung über die Methylolgruppen im Kondensationsprodukt (B) wobei in bekannter Weise Ether- oder Methylenbrücken gebildet werden.

Somit weist das Verfahren weiter in der nächsten Stufe die Stufe (W3) auf:
(W3) Erhitzen von expandierten Schaumstoffpartikeln wie in Stufe (W2) erhalten, derart, dass Komponente (B) zumindest teilweise durch Vernetzung über Halbaminalgruppen, vorzugsweise Methylolgruppen, aushärtet, wobei die expandierten Schaumstoffpartikel wie in Stufe (W2) erhalten in einer Form erhitzt werden.

Die Vernetzung kann durch Wasserabspaltung aus den Halbaminalgruppen, vorzugsweise den Methylolgruppen, erfolgen. Eine Abspaltung von Aldehyden ist gleichfalls möglich, die dann zu vernetzten Aminalstrukturen führt.

In Stufe (W3) wird vorzugsweise auf Temperaturen oberhalb 80 °C erhitzt, vorzugsweise auf eine Temperatur im Bereich von 80 °C bis 200 °C, weiter vorzugsweise 110 bis 180 °C.

Die in Stufe (W3) verwendete Form kann beliebig ausgestaltet sein solange sie die Durchführung der Stufe (W3) erlaubt. Die Form kann auch als eine Druckvorrichtung ausgestaltet sein.

Nach der Entnahme des Schaumstoffformteils aus der Form kann das Formteil weiter bearbeitet werden, falls gewünscht. Beispielsweise kann es in Platten geschnitten werden.

Das erfindungsgemäße Verfahren kann in einer Ausführungsform die Stufe (W0) vor der Stufe (W1) aufweisen:
(W0) Expandieren eines expandierbaren Schaumstoffgranulats.

Als expandierbares Schaumstoffgranulat werden vorzugsweise die eingangs im Stand der Technik beschriebenen expandierbaren Schaumstoffgranulate eingesetzt, also EPS, EP wie EPE oder EPP, oder E-tPU. Derartige expandierbare Schaumstoffgranulate sind bekannt. Sie können nach bekannten Verfahren hergestellt werden und/oder sind kommerziell erhältlich.

Die expandierbaren Schaumstoffpartikel EPS und EPE und EPP können neben Einheiten abgeleitet von Styrol, Ethylen oder Proplyen als einzigem Monomer auch Einheiten abgeleitet von anderen polymerisierbaren Monomeren enthalten. Derartige Copolymere werden durch den Begriff EPS, EPE und EPP wie in dieser Beschreibung verwendet, umschlossen.

Die expandierenden Schaumstoffpartikel können auch unexpandierte oder teilweise expandierte Partikel oder Mischungen davon enthalten. Die expandierbaren Partikel können auch bereits teilweise expandiert sein.

Die expandierbaren Schaumstoffpartikel des Schaumstoffgranulats, welche in Stufe (W0) eingesetzt werden, vorzugsweise Polystyrolpartikel, können eine mittlere Partikelgröße zwischen 0,1 und 5 mm oder zwischen 0,5 und 3 mm oder zwischen 0,5 und 1,5 mm oder zwischen 0,7 und 1,0 mm aufweisen.

Die Dichte der expandierbaren Schaumstoffpartikel des Schaumstoffgranulats, vorzugsweise Polystyrolpartikel, kann zwischen 5 kg/m³ und 50 kg/m³ oder zwischen 5 kg/m³ und 20 kg/m³ oder zwischen 7 kg/m³ und 18 kg/m³ oder zwischen 9 kg/m³ und 14 kg/m³ betragen, gemessen nach DIN EN 1602.

Die expandierbaren Schaumstoffpartikel des Schaumstoffgranulats, vorzugsweise Polystyrolpartikel, welche in Stufe (W0) eingesetzt werden, enthalten mindestens ein Treibmittel. Das bevorzugte Treibmittel umfasst flüssige physikalische Treibmittel, die flüchtige Flüssigkeiten sind und die ein Treibgas durch Verdampfen des Treibmittels oder durch Zersetzung des Treibmittels beim Erwärmen erzeugen.

Die in den expandierbaren Partikeln vorhandene Treibmittelmenge kann zwischen 1 und 12 Gew.-% oder zwischen 1 und 8 Gew.-% oder zwischen 2 und 8 Gew.-% oder zwischen 4 und 8 Gew.-% bezogen auf das Gesamtgewicht eines Partikels betragen.

Treibmittel, die zur Verwendung geeignet sind, sind im Stand der Technik bekannt. Das Treibmittel kann eine Flüssigkeit mit einem Siedepunkt des atmosphärischen Drucks zwischen -50 °C und 100 °C oder zwischen 0 °C und 50 °C sein.

Beispiele für Treibmittel sind organische Verbindungen wie Kohlenwasserstoffe, halogenierte Kohlenwasserstoffe, Alkohole, Ketone und Ether. Spezielle Beispiele für Kohlenwasserstoff-Treibmittel umfassen Propan, Butan, ein Pentan wie n-Pentan oder Isopentan, und Hexan. Ein Pentan wie n-Pentan oder Isopentan ist ein bevorzugtes Treibmittel.

In einer Ausführungsform können die expandierbaren Schaumstoffpartikel - müssen aber nicht - bereits mit einem Flammschutzmittel ausgerüstet sein. Beispielsweise ist bekannt, dass expandierbare Polystyrolqualitäten seitens der Hersteller bereits mit Flammschutzmitteln wie bromierten Styrol-Butadien-Copolymeren ausgerüstet sein können.

Die vorstehend beschriebenen Stufen (W1) bis (W3) und gegebenenfalls (W0) des erfindungsgemäßen Verfahrens können in einer Ausführungsform unmittelbar hintereinander in Sequenz ausgeführt werden, d.h. ohne Zwischenschritte zwischen den einzelnen Stufen.

In einer weiteren Ausführungsform lässt das Verfahren zwischen den Stufen einen oder mehrere Zwischenschritte zu. Beispielsweise kann das nach der Stufe (W1) erhaltene Produkt einem oder mehreren weiteren Verfahrensschritten ausgesetzt werden, bevor es der nachfolgenden Stufe (W2) zugeführt wird. Auch das nach der Stufe (W2) erhaltene Produkt kann einem oder mehreren weiteren Verfahrensschritten ausgesetzt werden, bevor es der nachfolgenden Stufe (W3) zugeführt wird. Beispielsweise können die nach der Stufe (W2) erhaltenen Schaumstoffpartikel angefärbt oder antimikrobiell ausgerüstet werden.

### Dritter Aspekt der Erfindung: Expandiertes Schaumstoffpartikel und Schaumstoffformteil

In einem ***dritten Aspekt*** betrifft die Erfindung ein expandiertes Schaumstoffpartikel aufweisend eine Zusammensetzung wie im ***ersten Aspekt*** definiert.

Dieses expandierte Schaumstoffpartikel wird entweder nach Stufe (W1) oder (W2) des Verfahrens wie im ***zweiten Aspekt*** beschrieben erhalten.

Die Erfindung betrifft auch ein Schaumstoffformteil, aufweisend einander berührende expandierte Schaumstoffpartikel zumindest enthaltend Komponenten (A), (B) und (C), wobei Komponente (B) zumindest teilweise ausgehärtet ist.

Dieses expandierte Schaumstoffformteil wird nach Stufe (W3) des Verfahrens, wie im ***zweiten Aspekt*** beschrieben, erhalten.

In einer Ausführungsform weist das Schaumstoffformteil folgende Gehalte auf:
10 bis 90 Gew.-% expandierte Schaumstoffpartikel;
3 bis 40 Gew.-% Komponente (A);
3 bis 50 Gew.-% zumindest teilweise ausgehärtete Komponente (B);
0,1 bis 5 Gew.-% Härter (C);
wobei die Summe der genannten Bestandteile 100 Gew.-% ergibt.

In einer weiteren bevorzugten Ausführungsform weist das Schaumstoffformteil folgende Gehalte auf:
10 bis 60 Gew.-% expandierte Schaumstoffpartikel;
15 bis 35 Gew.-% Komponente (A);
15 bis 45 Gew.-% zumindest teilweise ausgehärtete Komponente (B);
0,1 bis 5 Gew.-% Härter (C);
wobei die Summe der genannten Bestandteile 100 Gew.-% ergibt.

In einer weiteren bevorzugten Ausführungsform weist das Schaumstoffformteil folgende Gehalte auf:
25 bis 45 Gew.-% expandierte Schaumstoffpartikel;
20 bis 35 Gew.-% Komponente (A);
25 bis 50 Gew.-% zumindest teilweise ausgehärtete Komponente (B);
0,1 bis 5 Gew.-% Härter (C);
wobei die Summe der genannten Bestandteile 100 Gew.-% ergibt.

In einer weiteren bevorzugten Ausführungsform weist das Schaumstoffformteil folgende Gehalte auf:
30 bis 45 Gew.-% expandierte Schaumstoffpartikel;
22 bis 30 Gew.-% Komponente (A);
28 bis 40 Gew.-% zumindest teilweise ausgehärtete Komponente (B);
0,1 bis 5 Gew.-% Härter (C);
wobei die Summe der genannten Bestandteile 100 Gew.-% ergibt.

Die nach dem erfindungsgemäßen Verfahren hergestellten Schaumstoffformteile weisen eine vorteihaft niedrige Wärmeleitfähigkeit auf. Vorzugsweise liegt die Wärmeleitfähigkeit unterhalb 0,05 W/(mK) gemessen nach DIN EN 12667, weiter bevorzugt unterhalb 0,03 W/(mK) oder unterhalb 0,01 W/(mK).

### Vierter Aspekt der Erfindung: Verwendung einer Zusammensetzung wie im ersten Aspekt definiert

In einem ***vierten Aspekt*** betrifft die Erfindung die Verwendung einer Zusammensetzung zumindest aufweisend die Komponenten (A) bis (D) wie im *ersten Aspekt* definiert zur Erhöhung der Flammbeständigkeit von Schaumstoffen, vorzugsweise von Schaumstoffen aufweisend expandiertes Polystyrol, expandiertes Polyolefin wie expandiertes Polyethylen oder expandiertes Polypropylen, oder expandiertes Polyurethan, insbesondere expandiertes thermoplastische Polyurethan, oder eine Mischung aus zwei oder drei davon, vorzugsweise expandiertes Polystyrol.

In einer weiteren Ausführungsform betrifft die Erfindung die Verwendung eines Schaumstoffformteils wie im ***dritten Aspekt*** definiert als Dämmmaterial, vorzugsweise als Dämmmaterial im Bereich der Bautechnik.

Die Dämmung betrifft vorzugsweise die Schall- und Wärmedämmung wie auch eine mechanische Dämmung, d.h. einen Schutz gegen mechanische Einwirkung.

In einer bevorzugten Ausführungsform wird das erfindungsgemäße Schaumstoffformteil zur Schall- und Wärmedämmung einer Gebäudewand oder einer Gebäudedecke verwendet.

Der Begriff "*Dämmmaterial*" wird synonym zum Begriff "*Isoliermaterial*" verwendet.

Die erfindungsgemäße Zusammensetzung kann auch zur Erhöhung der Flammbeständigkeit von extrudiertem Polystyrol (XPS) verwendet werden.

### Beispiele

### 1. Herstellungsbeispiel 1

Expandierbares Polystyrolgranulat wurde auf eine Dichte von ungefähr 18 kg/m³ expandiert. Die expandierten Polystyrolpartikel wurden dann in einem Trommelmischer mit einer erfindungsgemäßen Zusammensetzung in einem Gewichtsverhältnis von 1:2 für eine Dauer von 0,50 h bei einer Temperatur zwischen 0 und 30 °C vermischt. In der Zusammensetzung lagen Aluminiumtrihydroxid und ein Melaminharz (MF) in einem Gewichtsverhältnis von 1:1 vor. Das Gewichtsverhältnis von Melaminharz zu Ammoniumsulfat betrug 15:1. Aluminiumhydroxid, Melaminharz und Ammoniumsulfat lagen in der Zusammensetzung als 20proz. Lösung vor.

Nach dem Vermischen wurde überschüssige Flüssigkeit aus dem Mischer abgelassen und die Temperatur zur Trocknung auf ca. 30 bis 70 °C erhöht. Nach einstündiger Trocknung wurde ein rieselfähiges Produkt erhalten.

Anschließend wurde das rieselfähige Produkt in eine quaderförmige Form eingefüllt und mit Dampf auf eine Temperatur von 90 °C bis 130 °C für eine Zeitdauer von 20 min erhitzt. Der entstandene Schaumstoffblock wurde anschließend in Platten geschnitten.

### 2. Herstellungsbeispiel 2

Expandierbares Polystyrolgranulat wurde auf eine Dichte von ungefähr 18 kg/m³ expandiert. Die expandierten Polystyrolpartikel wurden dann in einem Trommelmischer mit einer erfindungsgemäßen Zusammensetzung in einem Gewichtsverhältnis von 1:4 für eine Dauer von 0,50 h bei einer Temperatur zwischen 0 und 30 °C vermischt. In der Zusammensetzung lagen Aluminiumtrihydroxid und ein Melaminharz (MF) in einem Gewichtsverhältnis von 1:1 vor. Das Gewichtsverhältnis von Melaminharz zu Ammoniumsulfat betrug 15:1. Aluminiumhydroxid, Melaminharz und Ammoniumsulfat lagen in der Zusammensetzung als 20proz. Lösung vor.

Nach dem Vermischen wurde überschüssige Flüssigkeit aus dem Mischer abgelassen und die Temperatur zur Trocknung auf ca. 30 bis 70 °C erhöht. Nach einstündiger Trocknung wurde ein rieselfähiges Produkt erhalten.

Das Beschichten und Trocknen wurde dann zweimal wiederholt.

Anschließend wurde das rieselfähige Produkt in eine quaderförmige Form eingefüllt und mit Dampf auf eine Temperatur von 90 °C bis 130 °C für eine Zeitdauer von 20 min erhitzt. Der entstandene Schaumstoffblock wurde anschließend in Platten geschnitten.

### 3. Herstellungsbeispiel 3

Expandierbares Polystyrolgranulat wurde auf eine Dichte von ungefähr 18 kg/m³ expandiert. Die expandierten Polystyrolpartikel wurden dann in einem Trommelmischer mit einer erfindungsgemäßen Zusammensetzung in einem Gewichtsverhältnis von 1:5 für eine Dauer von 0,50 h bei einer Temperatur zwischen 0 und 30 °C vermischt. In der Zusammensetzung lagen Magnesiumhydroxid und ein Melaminharz (MF) in einem Gewichtsverhältnis von 1:1 vor. Das Gewichtsverhältnis von Melaminharz zu Ammoniumphosphat betrug 15:1. Aluminiumhydroxid, Melaminharz und Ammoniumphosphat lagen in der Zusammensetzung als 30proz. Lösung vor.

Nach dem Vermischen wurde überschüssige Flüssigkeit aus dem Mischer abgelassen und die Temperatur zur Trocknung auf ca. 30 bis 70 °C erhöht. Nach einstündiger Trocknung wurde ein rieselfähiges Produkt erhalten.

Anschließend wurde das rieselfähige Produkt in eine quaderförmige Form eingefüllt und mit Dampf auf eine Temperatur von 90 °C bis 130 °C für eine Zeitdauer von 20 min erhitzt. Der entstandene Schaumstoffblock wurde anschließend in Platten geschnitten.

### 4. Herstellungsbeispiel 4

Expandierbares Polystyrolgranulat wurde auf eine Dichte von ungefähr 18 kg/m³ expandiert. Die expandierten Polystyrolpartikel wurden dann in einem Trommelmischer mit einer erfindungsgemäßen Zusammensetzung in einem Gewichtsverhältnis von 1:5 für eine Dauer von 0,50 h bei einer Temperatur zwischen 0 und 30 °C vermischt. In der Zusammensetzung lagen Magnesiumhydroxid und Aluminiumtrihydroxid im Gewichtsverhältnis 1:1 vor. Das Gewichtsverhältnis der Summe aus Magnesiumhydroxid und Aluminiumtrihydroxid zu einem Melaminharz (MF) betrug 1:1. Das Gewichtsverhältnis von Melaminharz zu Ammoniumphosphat betrug 15:1. Aluminiumhydroxid, Melaminharz und Ammoniumphosphat lagen in der Zusammensetzung als 30proz. Lösung vor.

Nach dem Vermischen wurde überschüssige Flüssigkeit aus dem Mischer abgelassen und die Temperatur zur Trocknung auf ca. 30 bis 70 °C erhöht. Nach einstündiger Trocknung wurde ein rieselfähiges Produkt erhalten.

Anschließend wurde das rieselfähige Produkt in eine quaderförmige Form eingefüllt und mit Dampf auf eine Temperatur von 90 °C bis 130 °C für eine Zeitdauer von 20 min erhitzt. Der entstandene Schaumstoffblock wurde anschließend in Platten geschnitten.

### Prüfung der Eignung als Flammschutzmittel

Zur Beurteilung des Brandverhaltens eines erfindungsgemäßen Polystyrolschaumstoffformteils in Form einer Platte nach Herstellungsbeispiel 2 wurde diese einer rauschenden Bunsenbrennerflamme ausgesetzt. Das geschmolzene Polystyrol war nicht mehr fließfähig bzw. zeigte die Schmelze ein zumindest stark vermindertes Fließverhalten. Der Brandherd blieb lokal begrenzt. Insbesondere bildete sich keine brennende Polystyrolschmelze.

Im Vergleich dazu zeigte eine Polystyrolschaumstoffplatte, die nicht mit der erfindungsgemäßen Zusammensetzung behandelt worden war, die aber ansonsten gleich zur erfindungsgemäßen Schaumstoffplatte war, ein sofortiges thermoplastisches Schmelzen mit Abtropfen, was die Bildung einer brennenden Polystyrolschmelze zur Folge hatte.

## Patentansprüche

1. Verfahren zur Herstellung eines Schaumstoffformteils, aufweisend zumindest die Stufe (W1):
(W1) Kontaktieren von expandierten Schaumstoffpartikeln mit einer Zusammensetzung enthaltend zumindest die Komponenten (A) bis (D):
(A) ein mineralisches Flammschutzmittel;
(B) ein Additionsprodukt oder Kondensationsprodukt aus Melamin und einem Aldehyd, vorzugsweise Formaldehyd, oder Harnstoff und einem Aldehyd, vorzugsweise Formaldehyd, oder ein Gemisch davon;
(C) einen Härter für das Additionsprodukt oder Kondensationsprodukt (B);
(D) Wasser;
wobei ein Gewichtsverhältnis (A) : (B) im Bereich von 1 : 0,8 bis 1 : 2 liegt und ein Gewichtsverhältnis (B) : (C) im Bereich von 20 : 1 bis 10 : 1 liegt;
und weiter aufweisend die Stufe (W2):
(W2) Entfernen von Wasser aus den expandierten Schaumstoffpartikeln wie in Stufe (W1) erhalten;
wobei die Sequenz der Stufen (W1) und (W2) einmal oder auch mehrfach ausgeführt wird.

2. Verfahren nach Anspruch 1, wobei ist:
(A) ein Aluminium-, Magnesium- oder Calciumsalz, oder zwei oder drei davon; oder
ein oder mehrere Silikate; oder
ein oder mehrere Carbonate; oder
ein oder mehrere Aerogele; oder
ein Aluminium-, Magnesium- oder Calciumsalz, oder zwei oder drei davon; und ein oder mehrere Silikate; oder
ein Aluminium-, Magnesium- oder Calciumsalz, oder zwei oder drei davon; und ein oder mehrere Silikate; und ein oder mehrere Carbonate; oder
ein Aluminium-, Magnesium- oder Calciumsalz, oder zwei oder drei davon; und ein oder mehrere Silikate; und ein oder mehrere Carbonate; und ein oder mehrere Aerogele; oder
ein Aluminium-, Magnesium- oder Calciumsalz, oder zwei oder drei davon; und ein oder mehrere Carbonate; oder
ein Aluminium-, Magnesium- oder Calciumsalz, oder zwei oder drei davon; und ein oder mehrere Carbonate; und ein oder mehrere Aerogele; oder
ein Aluminium-, Magnesium- oder Calciumsalz, oder zwei oder drei davon; und ein oder mehrere Aerogele; oder
ein oder mehrere Silikate; und ein oder mehrere Carbonate; oder ein oder mehrere Silikate; und ein oder mehrere Carbonate; und ein oder mehrere Aerogele; oder
ein oder mehrere Silikate; und ein oder mehrere Aerogele; oder ein oder mehrere Carbonate; und ein oder mehrere Aerogele.

3. Verfahren nach Anspruch 1 oder 2, wobei der Härter (C) eine organische Säure oder eine anorganische Säure oder ein Ester davon ist oder enthält.

4. Verfahren nach einem der vorstehenden Ansprüche, wobei das Entfernen von Wasser gemäß Stufe (W2) thermisch erfolgt.

5. Verfahren nach Anspruch 4, wobei die Temperatur im Bereich von 30 bis 80 °C liegt.

6. Verfahren nach Anspruch 4 oder 5, wobei das Entfernen von Wasser gemäß Stufe (W2) solange fortgesetzt wird, bis der Wassergehalt so niedrig ist, dass die Schaumstoffpartikel rieselfähig sind; oder wobei das Entfernen von Wasser gemäß stufe (W2) solange durchgeführt wird, bis die Schaumstoffpartikel trocken erscheinen und nicht mehr zusammenkleben.

7. Verfahren nach einem der Ansprüche 1 bis 6, weiter aufweisend die Stufe (W₃):
(W₃) Erhitzen von expandierten Schaumstoffpartikeln wie in Stufe (W2) erhalten, derart, dass Komponente (B) zumindest teilweise durch Vernetzung über Methylolgruppen aushärtet, wobei die expandierten Schaumstoffpartikel wie in Stufe (W2) erhalten in einer Form erhitzt werden.

8. Verfahren nach einem der Ansprüche 1 bis 7, aufweisend die Stufe (W0) vor Stufe (W₁):
(W0) Expandieren von expandierbaren Schaumstoffpartikeln.

9. Expandierte Schaumstoffpartikel aufweisend eine Zusammensetzung mit den Komponenten (A), (B) und (C) und gegebenenfalls (D), erhältlich nach Stufe (W1) oder (W2) des Verfahrens nach einem der Ansprüche 1 bis 8.

10. Expandierte Schaumstoffpartikel nach Anspruch 9, wobei die Schaumstoffpartikel rieselfähig sind,
oder
wobei die Schaumstoffpartikel trocken erscheinen und nicht mehr zusammenkleben.

11. Schaumstoffformteil, aufweisend einander berührende expandierte Schaumstoffpartikel zumindest enthaltend Komponenten (A), (B) und (C), wobei Komponente (B) zumindest teilweise ausgehärtet ist, erhältlich nach Stufe (W3) des Verfahrens nach Anspruch 7 oder 8.

12. Expandierte Schaumstoffpartikel nach Anspruch 9 oder 10 oder Schaumstoffformteil nach Anspruch 11, wobei der Schaumstoff expandiertes Polystyrol, expandiertes Polyolefin wie expandiertes Polyethylen oder expandiertes Polypropylen, oder expandiertes Polyurethan aufweist, oder eine Mischung aus zwei oder drei davon.

13. Expandierte Schaumstoffpartikel oder Schaumstoffformteil nach Anspruch 12, wobei der Schaumstoff expandiertes Polystyrol ist.

14. Verwendung eines Schaumstoffformteils wie in Anspruch 12 oder 13 definiert, als Dämmmaterial.

15. Verwendung nach Anspruch 14 als Dämmmaterial im Bereich der Bautechnik, insbesondere zur Schall- oder Wärmedämmung einer Gebäudewand oder einer Gebäudedecke.

## Claims

1. A method for the production of a foam moulded part comprising at least step (W1):
(W1) bringing into contact expanded foam particles having a composition containing at least the components (A) to (D):
(A) a mineral flame retardant;
(B) an addition product or condensation product of melamine and an aldehyde, preferably formaldehyde, or urea and an aldehyde, preferably formaldehyde, or a mixture thereof;
(C) a hardener for the addition product or condensation product (B);
(D) water;
wherein a weight ratio (A) : (B) lies in the range of 1 : 0.8 to 1 : 2 and a weight ratio (B) : (C) lies in the range of 20 : 1 to 10 : 1;
and further comprising step (W2):
(W2) removal of water from the expanded foam particles as obtained in step (W1);
wherein the sequence of steps (W1) and (W2) is performed once or also multiple times.

2. The method according to claim 1, wherein:
(A) an aluminium, magnesium or calcium salt, or two or three thereof; or
one or more silicates; or
one or more carbonates; or
one or more aerogels; or
an aluminium, magnesium or calcium salt, or two or three thereof;
and one or multiple silicates; or
an aluminium, magnesium or calcium salt, or two or three thereof;
and one or multiple silicates; and one or multiple carbonates; or
an aluminium, magnesium or calcium salt, or two or three thereof;
and one or multiple silicates; and one or multiple carbonates; and one or multiple aerogels; or
an aluminium, magnesium or calcium salt, or two or three thereof;
and one or multiple carbonates; or
an aluminium, magnesium or calcium salt, or two or three thereof;
and one or multiple carbonates; and one or multiple aerogels; or
an aluminium, magnesium or calcium salt, or two or three thereof;
and one or multiple aerogels; or
one or multiple silicates; and one or multiple carbonates; or one or multiple silicates; and one or multiple carbonates; and one or multiple aerogels; or
one or multiple silicates; and one or multiple aerogels; or one or multiple carbonates; and one or multiple aerogels.

3. The method according to claim 1 or 2, wherein the hardener (C) is, or contains, an organic acid or an inorganic acid or an ester thereof.

4. The method according to one of the preceding claims, wherein the removal of water according to step (W2) takes place thermally.

5. The method according to claim 4, wherein the temperature lies in the range of 30 to 80 °C.

6. The method according to claim 4 or 5, wherein the removal of water according to step (W2) continues until the water content is so low that the foam particles are free-flowing; or wherein the removal of water according to step (W2) is carried out until the foam particles appear dry and no longer stick together.

7. The method according to one of claims 1 to 6, further comprising the step (W₃):
(W₃) heating of expanded foam particles as obtained in step (W2) in such a manner that component (B) hardens at least partially through wetting via methylol groups, wherein the expanded foam particles as obtained in step (W2) are heated in a mould.

8. The method according to one of claims 1 to 7 comprising step (W0) before step (W1):
(W0) expansion of expandable foam particles.

9. Expanded foam particles having a composition with the components (A), (B) and (C) and possibly (D), obtainable following step (W1) or (W2) of the method according to one of claims 1 to 8.

10. Expanded foam particles according to claim 9, wherein the foam particles are free-flowing
or
wherein the foam particles appear dry and no longer stick together.

11. A foam moulded part comprising expanded foam particles which are in contact with one another at least containing components (A), (B) and (C), wherein component (B) is at least partially hardened, obtainable following step (W₃) of the method according to claim 7 or 8.

12. Expanded foam particle according to claim 9 or 10 or foam moulded part according to claim 11, wherein the foam comprises expanded polystyrene, expanded polyolefin, such as expanded polyethylene or expanded polypropylene, or expanded polyurethane, or a mixture of two or three thereof.

13. Expanded foam particle or foam moulded part according to claim 12, wherein the foam is expanded polystyrene.

14. Use of a foam moulded part as defined in claim 12 or 13 as an insulating material.

15. Use according to claim 14 as an insulating material in the field of structural engineering, in particular for the sound or heat insulation of a building wall or a building ceiling.

## Revendications

1. Procédé de fabrication d'une pièce moulée en mousse, présentant au moins l'étape (W1) :
(W1) mise en contact de particules de mousse expansées avec une composition contenant au moins l'un des composants (A) à (D) :
(A) un agent d'ignifugation minéral ;
(B) un produit d'addition ou un produit de condensation de mélamine et d'un aldéhyde, de préférence le formaldéhyde, ou d'urée et d'un aldéhyde, de préférence le formaldéhyde, ou un mélange de ceux-ci ;
(C) un durcisseur pour le produit d'addition ou le produit de condensation (B) ;
(D) de l'eau ;
le rapport en poids (A):(B) étant compris dans la plage de 1:0,8 à 1:2, et le rapport en poids (B):(C) étant compris dans la plage de 20:1 à 10:1 ;
et présentant en outre l'étape (W2) :
(W2) élimination de l'eau des particules de mousse expansées telles qu'obtenues dans l'étape (W1) ;
la séquence des étapes (W1) et (W2) étant exécutée une fois, ou aussi plusieurs fois.

2. Procédé selon la revendication 1, dans lequel
(A) est un sel d'aluminium, de magnésium ou de calcium, ou deux ou trois d'entre eux ; ou
un ou plusieurs silicates ; ou
un ou plusieurs carbonates ; ou
un ou plusieurs aérogels ; ou
un sel d'aluminium, de magnésium ou de calcium, ou deux ou trois d'entre eux ; et un ou plusieurs silicates ; ou
un sel d'aluminium, de magnésium ou de calcium, ou deux ou trois d'entre eux ; et un ou plusieurs silicates ; et un ou plusieurs carbonates ; ou
un sel d'aluminium, de magnésium ou de calcium, ou deux ou trois d'entre eux ; et un ou plusieurs silicates ; et un ou plusieurs carbonates ; et un ou plusieurs aérogels ; ou
un sel d'aluminium, de magnésium ou de calcium, ou deux ou trois d'entre eux ; et un ou plusieurs carbonates ; ou
un sel d'aluminium, de magnésium ou de calcium, ou deux ou trois d'entre eux ; et un ou plusieurs carbonates ; et un ou plusieurs aérogels ; ou
un sel d'aluminium, de magnésium ou de calcium, ou deux ou trois d'entre eux ; et un ou plusieurs aérogels ; ou
un ou plusieurs silicates ; et un ou plusieurs carbonates ; ou un ou plusieurs silicates ; et un ou plusieurs carbonates ; et un ou plusieurs aérogels ; ou
un ou plusieurs silicates ; et un ou plusieurs aérogels ; ou un ou plusieurs carbonates ; et un ou plusieurs aérogels.

3. Procédé selon la revendication 1 ou 2, dans lequel le durcisseur (C) est ou contient un acide organique ou un acide inorganique ou un ester de ceux-ci.

4. Procédé selon l'une des revendications précédentes, dans lequel l'élimination de l'eau selon l'étape (W2) est effectuée par voie thermique.

5. Procédé selon la revendication 4, dans lequel la température est comprise dans la plage de 30 à 80 °C.

6. Procédé selon la revendication 4 ou 5, dans lequel l'élimination de l'eau selon l'étape (W2) est poursuivie jusqu'à ce que la teneur en eau soit faible au point que les particules de mousse puissent s'écouler par un écoulement libre ; ou dans lequel l'élimination de l'eau selon l'étape (W2) est mise en oeuvre jusqu'à ce que les particules de mousse semblent sèches et ne collent plus les unes aux autres.

7. Procédé selon l'une des revendications 1 à 6, présentant en outre l'étape (W3) :
(W3) chauffage des particules de mousse expansées telles qu'obtenues dans l'étape (W2), de telle sorte que le composant (B) durcisse au moins partiellement par réticulation par l'intermédiaire de groupes méthylol, les particules de mousse expansées telles qu'obtenues l'étape (W2) étant chauffées dans un moule.

8. Procédé selon l'une des revendications 1 à 7, présentant l'étape (W0) avant l'étape (W1) :
(W0) expansion de particules de mousse expansibles.

9. Particules de mousse expansées présentant une composition comportant les composants (A), (B) et (C) et éventuellement (D), pouvant être obtenues par l'étape (W1) ou (W2) du procédé selon l'une des revendications 1 à 8.

10. Particules de mousse expansées selon la revendication 9, les particules de mousse présentant un écoulement libre,
ou
dans lequel les particules de mousse paraissent sèches et ne collent plus les unes aux autres.

11. Pièce moulée en mousse, présentant des particules de mousse expansées en contact les unes avec les autres, contenant au moins les composants (A), (B) et (C), le composant (B) étant au moins partiellement durci, pouvant être obtenu par l'étape (W3) du procédé selon la revendication 7 ou 8.

12. Particules de mousse expansées selon la revendication 9 ou 10 ou pièce moulée en mousse selon la revendication 11, la mousse présentant du polystyrène expansé, une polyoléfine expansée telle que le polyéthylène expansé ou le polypropylène expansé, ou du polyuréthanne expansé, ou un mélange de deux ou trois d'entre eux.

13. Particules de mousse expansées ou pièce moulée en mousse selon la revendication 12, la mousse étant un polystyrène expansé.

14. Utilisation de la pièce moulée en mousse telle que définie dans la revendication 12 ou 13, en tant que matériau isolant.

15. Utilisation selon la revendication 14 en tant que matériau isolant dans le domaine de la construction, en particulier pour l'isolation sonique ou thermique d'un mur de bâtiment ou d'un plafond de bâtiment.
